# EUROPÄISCHE PATENTSCHRIFT

(11) **EP 2 004 869 B1**
(45) Veröffentlichungstag und Bekanntmachung des Hinweises auf die Patenterteilung: **15.12.2010**
(21) Anmeldenummer: 07727505.5
(22) Anmeldetag: 29.03.2007
(51) Int. Cl.: C22B 26/10, C22B 9/00, C25C 3/02, C25B 1/36, C25C 7/06, C22B 43/00

(54) **VERFAHREN ZUR WASSERENTFERNUNG AUS ALKALIMETALLAMALGAM**
METHOD FOR REMOVING WATER FROM ALKALI METAL AMALGAM
PROCÉDÉ POUR ÉLIMINER L'EAU D'UN AMALGAME DE MÉTAUX ALCALINS

(30) Priorität: 31.03.2006 EP 06112058
(43) Veröffentlichungstag der Anmeldung: 24.12.2008
(73) Patentinhaber: BASF SE, 67056 Ludwigshafen (DE)
(72) Erfinder: MARTIN, Marc, 67071 Ludwigshafen (DE); HUBER, Günther, 67071 Ludwigshafen (DE); LUTZ, Michael, 67346 Speyer (DE); KANTHER, Wolfgang, 67125 Dannstadt-Schauernheim (DE); GUTH, Josef, 67251 Freinsheim (DE); FRIEDRICH, Holger, 67549 Worms (DE)
(86) Internationale Anmeldenummer: PCT/EP2007/053033
(87) Internationale Veröffentlichungsnummer: WO 2007/113209

(56) Entgegenhaltungen:
- DD-A1- 266 600
- DD-A5- 294 469
- DE-A1- 2 020 480
- DE-A1- 2 426 078
- DE-A1- 19 859 563
- GB-A- 1 548 071
- RU-C1- 2 071 508
- US-A- 4 204 937
- DATABASE WPI Week 197523 Derwent Publications Ltd., London, GB; AN 1975-38795W XP002455175 & SU 436 799 A (LEONTOVICH E V) 3. Januar 1975 (1975-01-03)

## Beschreibung

Die vorliegende Erfindung betrifft ein Verfahren zum Entfernen von geringen Mengen an Wasser aus Alkalimetallamalgam, welches beispielsweise aus einer Chlor-Alkali-Elektrolyse nach dem Amalgamverfahren resultiert. Andere Bestandteile, die möglicherweise durch die bei der Chlor-Alkali-Elektrolyse eingesetzte Sole und/oder .durch Alterungsprozesse der Anlage in das Alkalimetallamalgam gelangen, können ebenfalls mit dem bereitgestellten Verfahren aus diesem entfernt werden. Weiterhin betrifft die Erfindung eine zur Durchführung des Verfahrens geeignete Vorrichtung.

Die Chlor-Alkali-Elektrolyse nach dem Amalgamverfahren stellt ein wichtiges industrielles Verfahren zur Gewinnung von Chlor dar. Hierbei wird mittels elektrischer Energie ein Alkalichlorid, das als Sole vorliegt, also eine wässrige Lösung, in Chlor und Alkalimetall gespalten. Das Alkalimetall bildet mit dem Quecksilber an der Kathode die Legierung Alkalimetallamalgam. Das gebildete Alkalimetallamalgam kann von der abgereicherten Sole aufgrund eines ausgeprägten Dichteunterschieds abgetrennt werden, wobei geringe Mengen an Wasser mit dem Amalgamstrom mitgerissen werden können. Beim Amalgamverfahren wird das gebildete Alkalimetallamalgam üblicherweise in einen Zersetzer geleitet, in dem es an einem Katalysator mit Wasser oder Alkoholen zu Alkalimetallhydroxid oder Alkoholaten und Wasserstoff umgesetzt und das Alkalimetallarme oder Alkalimetall-freie Quecksilber in die Chlor-Alkali-Elektrolyse zurückgeführt wird.

In DE-A-198 59 563 wird ein Verfahren beschrieben, bei dem aus dem Zwischenprodukt Alkalimetallamalgam, durch Elektrolyse das entsprechende Alkalimetall gewonnen wird. Hierbei wird das Alkalimetallamalgam in einem Wärmetauscher auf eine geeignete Betriebstemperatur gebracht, die für Natriumamalgam zwischen 310 und 400°C und für Kaliumamalgam zwischen 260 und 400 °C liegen sollte, bevor es einer Elektrolyse mit einer Alkalimetallamalgam enthaltenden Anode, einem Alkalimetall ionenleitenden Festelektrolyt und flüssiges Alkalimetall als Kathode zugeführt wird.

Bei Verwendung eines aus einer Chlor-Alkali-Elektrolyse stammenden Alkalimetallamalgams, kann es immer wieder zu Stockungen und Verstopfungen in den Leitungen und Anlagenteilen kommen, die im Wesentlichen aus Alkalihydroxiden bestehen. Diese Verkrustungen nehmen weiterhin im Strom enthaltene Verunreinigungen, wie z.B. Rost, auf. Für die Gewinnung des Alkalimetalls aus Alkalimetallamalgam mit dem bekannten Verfahren hat sich für den eingesetzten ionenleitenden Festelektrolyt insbesondere die Einwirkung von Wasser, überwiegend als Wasserdampf vorliegend, als besonders problematisch erwiesen.

GB-A-1,548,071 beschreibt ein Verfahren zum Betreiben einer Elektrolysezelle mit einer Quecksilberkathode, wobei vor Rückführung des abgereicherten Amalgams oder Quecksilbers mitgeführte feinere und gröbere Wassertropfen in einem Zyklon oder Zentrifuge zur Vermeidung daraus erwachsender Probleme abgetrennt werden.

US-A 4,204,937 bezieht sich auf ein Verfahren zum Reinigen von Quecksilber bei der Chlor-Alkali-Elektrolyse nach dem Amalgamverfahren, wobei aus dem Amalgam Metallverunreinigungen entfernt werden. Beschrieben wird, dass das Amalgam in einer wässrigen Lösung vollständig von Metallen entladen wird, um die gelösten Metallsalze kathodisch abzuscheiden.

DE-A 20 20 480 bezieht sich auf ein Verfahren zur Elektrolyse von Alkalichloriden nach dem Amalgamverfahren, wobei das gebildete Natriumamalgam in Zersetzerzellen in Quecksilber und Natronlauge zersetzt wird. Das Quecksilber wird vor der Rückführung in die Elektrolysezelle mit wässrigen Lösungen, die Chlor und/oder Eisen(III)chlorid enthalten, chemisch gereinigt.

SU-A 621 769 bezieht sich auf die Reinigung von Natriumamalgam, wobei das Amalgam mit Propyl- oder Isobutylalkohol gewaschen wird.

Aufgabe der vorliegenden Erfindung ist es, ein Verfahren zur Verfügung zu stellen, mit dem eine Anlage unter Verwendung von Alkalimetallamalgam möglichst lange ohne blockierende Verkrustungen betrieben werden kann. Insbesondere soll auf einfache, kontrollierbare und wirtschaftliche Weise geringe Mengen an Wasser und möglichen weiteren verunreinigenden Bestandteile aus Alkalimetallamalgam entfernt werden können.

Diese Aufgabe wird gelöst durch ein Verfahren zum Entfernen von geringen Mengen an Wasser und möglichen weiteren Bestandteilen aus Alkalimetallamalgam, wobei das Alkalimetallamalgam mit einem Element, welches nicht in Quecksilber löslich ist und eine Reaktion des Wassers mit dem Alkalimetallamalgam und den möglichen weiteren Bestandteilen zu Hydroxiden und Wasserstoff katalysiert und ausgewählt ist aus der Gruppe Eisen, Nickel, Kobalt, Titan, Chrom, Molybdän, Stähle, die gegen Quecksilber inert sind, Wolframcarbid und Graphit, in einer Abschneidervorrichtung in Kontakt gebracht wird.

Es wurde gefunden, dass die die Stockungen und Verstopfungen hervorrufenden Ablagerungen auf die Anwesenheit von Wasser zurückgeführt werden kann. Das mit dem Alkalimetallamalgam mitgeführte Wasser führt selbst in nur geringen Mengen zur Zersetzung des Alkalimetallamalgams, wobei Wasserstoff und Alkalimetallhydroxid entsteht, welches Verkrustungen und Ablagerungen bildet. Diese Reaktion wird durch Anwesenheit bestimmter Elemente, die nicht in Quecksilber löslich sind, beispielsweise Eisen, Graphit, Nickel, Kobalt, Titan, Chrom, Molybdän, Wolframcarbid und andere Metallen oder Metallionen katalysiert. Diese sind unter anderem in dem Material von Leitungen und Anlagenteilen vorhanden.

Neben dem mitgeführten Wasser gibt es in dem Alkalimetallamalgam weitere Bestandteile, welche eine Verunreinigung darstellen. Dies können mitgeführte Partikel sein, beispielsweise Eisenpartikel, welche ebenso als katalytisch wirkende Elemente einer Zersetzungsreaktion fungieren. Durch mitgeführte eisenhaltige Partikel, welche an der Wandung haften können, bilden sich dort Verkrustungen und Ablagerungen, die die Strömung des Alkalimetallamalgams beeinflussen. Hierbei kommt es zur Ausbildung einer besonders zähen Belegung, in der Eisenpartikel dicht von einer eng anliegenden, gut mit Quecksilber benetzten Schicht aus Hydroxiden umgeben sind, die sich zu größeren Agglomeraten zusammenlagern können. Neben Alterungserscheinigungen von Anlagenteilen, beispielsweise Rostbildung, kann die verwendete Sole eine mögliche Quelle der verunreinigenden Bestandteile darstellen. Die Solenzusammensetzung variiert je nach Herkunft und Qualität. Verunreinigungen der Sole sind Sulfate, Carbonate, Silikate und allgemein Metallionen, enthaltend Eisen, Calcium, Strontium, Magnesium, Barium, Zink sowie andere Alkali- und Erdalkaliionen.

Überraschend wurde gefunden, dass schon durch geringe Mengen an mitgeführtem Wasser und weiteren, katalytisch wirkenden Bestandteilen die Stockungen und Verstopfungen herbeigeführt werden, welche nur mit großem Aufwand und damit verbundenen langen Ausfallzeiten entfernt werden können.

Im Laufe der Betriebsdauer einer Anlage summieren sich die Ablagerungen und die verunreinigenden Bestandteile auf, so dass es zu blockierten Leitungen und Beeinträchtigungen des nachfolgenden Verfahrensablaufs kommen kann.

Als ebenfalls ungünstig hat sich die Anwesenheit von amalgamhaltigen Ablagerungen erwiesen, welche sich als zähe, nur schwer zu lösende Schicht an Flächen von Leitungen und Anlagenteilen ablagern kann. Eine intensive Verquiriung von Wassertröpfchen mit dem Alkalimetallamalgam, beispielsweise in Kreiselpumpen, kann die Bildung von so genannter Amalgam-Butter begünstigen, wodurch der weitere Verfahrensablauf beeinträchtigt werden kann. Als Amalgambutter werden in Zusammenhang mit der vorliegenden Erfindung zähe, feste Agglomerate von Hydroxiden und Amalgam bezeichnet.

Bei dem erfindungsgemäßen Verfahren wird das katalytisch wirkende Element derart zur Verfügung gestellt, dass eine möglichst große Fläche für eine Zersetzungsreaktion des Alkalimetallamalgams oder den weiteren Bestandteilen mit dem Wasser zur Verfügung steht. Die dabei gebildeten Hydroxide lagern sich ab, während der entstandene Wasserstoff an einer geeigneten Stelle abgeführt werden kann. Das katalytisch wirkende Element kann einfach durch Entfernen der Ablagerungen regeneriert werden.

Unter Alkalimetallamalgam wird im Sinne der vorliegenden Erfindung ein Amalgam der Alkalimetalle, vorzugsweise Lithium-, Natrium-, Kalium-, Rubidum- und Cäsiumamalgam, insbesondere Natrium- und Kaliumamalgam, meist bevorzugt Natriumamalgam verstanden.

Typischerweise enthält ein bei einer Chlor-Alkali-Elektrolyse gebildetes Alkalimetallamalgam nach einer Phasentrennung ca. 0,3 bis 5 ppm Wasser. Die Temperatur des Alkalimetallamalgams nach der Phasentrennung liegt typischerweise bei 80 °C. Das Wasser kann Störungen hervorrufen, beispielsweise durch Bildung von Ablagerungen in Wärmetauschern. Durch das erfindungsgemäße Verfahren lassen sich diese geringen Mengen an Wasser entfernen.

Erfindungsgemäß wird das Alkalimetallamalgam mit einem Element in einer Abscheidervorrichtung in Kontakt gebracht, welches sich nicht in Quecksilber löst und geeignet ist, eine Reaktion entsprechend dem erfindungsgemäßen Verfahren zu katalysieren. Dieses Element katalysiert unter. anderem die Zersetzungsreaktion des Alkalimetallamalgams mit Wasser und kann Eisen, Nickel, Kobalt, Titan, Chrom, Molybdän, Stähle, die gegen Quecksilber inert sind, andere Metalle oder Metallionen, Graphit und Wolframcarbid umfassen.

In einer bevorzugten Ausführungsform wird das katalytisch wirkende Element aus der Gruppe ausgewählt, umfassend Eisen, Titan, Molybdän und Stähle, die gegen Quecksilber inert sind. Stähle, die gegen Quecksilber inert sind, sind beispielsweise Edelstähle mit der Werkstoffnummer 1.4401, 1.4541, 1.4571 gemäß DIN 17440.

Um einen intensiven Kontakt des Alkalimetallamalgams, des Wassers und des katalytisch wirkenden Elementes zu gewährleisten, ist das Element vorzugsweise derart gestaltet, dass eine große Fläche bereitgestellt wird, welche von dem Alkalimetallamalgam um- und/oder überströmt wird, ohne einen großen Druckverlust in der Alkalimetallamalgam-Strömung hervorzurufen. Erfindungsgemäß kann das katalytisch wirkende Element in Gestalt eines Gewebes, einer Packung oder einer Schüttung von Formkörpern in der Abscheidervorrichtung bereitgestellt werden. Bevorzugt ist das katalytisch wirkende Element ein zu einer Rolle aufgewickeltes Gewebe, welches in einer als Strömungsrohr ausgebildeten Abscheidervorrichtung angeordnet ist, innerhalb der die Zersetzungsreaktion katalysiert wird.

Die Abscheidervorrichtung wird vorzugsweise so dimensioniert, dass das Alkalimetallamalgam ohne großen Druckverlust aber mit einer für die katalysierte Zersetzungsreaktion ausreichenden Verweilzeit diese durchströmt. In einer bevorzugten Ausführungsform ist die Abscheidervorrichtung als Strömungsrohr gestaltet mit einen Durchmesser von 100 bis 600 mm und eine Länge von 100 bis 2000 mm.

Das bevorzugt eingesetzte Gewebe kann beispielsweise durch Längsrillen strukturiert sein, dass die Strömung des Alkalimetallamalgams durch die Abscheidervorrichtung begünstigt wird. Um den Druckverlust über die Abscheidervorrichtung gering zu halten, weist das bevorzugt eingesetzte Gewebe eine Maschenweite auf, die von dem Alkalimetallamalgam ungehindert passiert werden kann.

In einer bevorzugten Ausführungsform ist das katalytisch wirkende Element aus mehreren übereinander liegenden Schichten aufgebaut. Vorzugsweise ist die Maschenweite der ersten Schicht größer als die Maschenweite weiterer Schichten. Insbesondere weist die erste Schicht eine Maschenweite von 2 mm und mindestens eine weitere Schicht eine Maschenweite von 100 µm auf. Das oder die übereinander liegenden Gewebe sind vorzugsweise zu einer Rolle aufgewickelt und eventuell durch entlang der Strömungsrichtung verlaufende Elemente, beispielsweise Rippen oder Streben, verstärkt.

Durchströmt das Alkalimetallamalgam die Abscheidervorrichtung, kommt es bei Kontakt mit dem katalytisch wirkenden Element zur Zersetzungsreaktion des Alkalimetallamalgams mit dem Wasser, wobei Wasserstoff und Alkalimetallhydroxid gebildet werden. Der Wasserstoff wird teilweise mit dem Alkalimetallamalgam mitgerissen und an einer geeigneten Stelle aus dem Verfahren abgeführt. Das Alkalimetallhydroxid bildet auf dem katalytisch wirkenden Element Ablagerungen. Der Anteil des Wassers lässt sich mit dem erfindungsgemäßen Verfahren bis auf Werte von < 0,3 ppm, bevorzugt < 0,2 ppm reduziert.

Es lassen sich weitere, verunreinigende Bestandteile des Alkalimetallamalgams an dem katalytisch wirkenden Element abscheiden. Dies können einerseits alle Verunreinigungen sein, welche als Amalgam vorliegen und in Anwesenheit von Wasser an einem katalytisch wirkenden Element zu Hydroxiden zersetzt werden. Andererseits wirkt das katalytisch aktive Element sowie die entstehenden Ablagerungen - insbesondere nach einem gewissen Zeitraum - zunehmend als Filter, an dem weitere Verunreinigungen, beispielsweise Feststoffpartikel, abgeschieden werden. So können z.B. Kalzium-, Strontium- und Bariumverunreinigungen abgetrennt werden. Diese können sich als Salze, d.h. als Chloride, Hydroxide, Carbonate oder Oxide, in Form von Feststoffpartikeln im Amalgamstrom befinden.

Kalziumionen können aber auch während der Elektrolyse zu Kalziumamalgam umgesetzt worden sein, welches dann mit Wasser an dem katalytisch wirkenden Element zu dem entsprechenden Hydroxid und Wasserstoff reagiert.

Das erfindungsgemäße Verfahren ermöglicht es, durch Bildung von Ablagerungen innerhalb der Abscheidervorrichtung und auf dem katalytisch wirkenden Element, Verunreinigungen zu entfernen. Mit fortschreitender Betriebsdauer nehmen die Ablagerungen derart zu, dass der Druckverlust der Strömung über die Abscheidervorrichtung ansteigt. Erfindungsgemäß stellt der Druckverlust über die Abscheidervorrichtung ein Mittel bereit, mit dem die Belegung verfolgt und kontrolliert werden kann. Übersteigt der Druckverlust einen bestimmten Wert, kann die Abscheidervorrichtung regeneriert werden, indem die Ablagerungen entfernt werden. Die Regenerierung wird vorzugsweise bei Übersteigen eines Druckverlustes von 500 mbar, insbesondere von 1000 mbar durchgeführt. Die mit Ablagerungen belegte Abscheidervorrichtung kann durch Spülen, vorzugsweise mit Wasser, regeneriert werden. Beim Spülen werden die Ablagerungen von dem katalytisch wirkenden Element abgelöst und ausgespült. Spülzeiten von 30 min erweisen sich als ausreichend, um auch die schwerer löslichen Ablagerungen, insbesondere die Amalgamhaltigen Ablagerungen, aufzulösen. Anschließend wird die Abscheidervorrichtung durch Einblasen eines Gasstroms, vorzugsweise Stickstoff, getrocknet. In einer bevorzugten Ausführungsform kann ein temperierter Gasstrom über die Abscheidervorrichtung gelenkt werden, um den Trocknungsprozess zu verkürzen. Die Temperatur des Gasstroms liegt in einem Bereich von 20 bis 150 °C.

In einer bevorzugten Ausführungsform des Verfahrens werden mehrere, vorzugsweise zwei Abscheidervorrichtungen in den Strömungsweg des Alkalimetallamalgams parallel zueinander angeordnet, die im Wechsel betrieben werden können. Überschreitet der Druckverlust einer Abscheidervorrichtung einen vorgegebenen Wert, kann der Strömungsweg des Alkalimetallamalgams auf die parallele Abscheidervorrichtung umgelenkt werden und die erste Abscheidervorrichtung wird regeneriert. Damit ist eine kontinuierliche Fahrweise des erfindungsgemäßen Verfahrens möglich.

In einer weiteren bevorzugten Ausführungsform des Verfahrens werden mindestens zwei Abscheidervorrichtungen hintereinander angeordnet, welche als Haupt- und Nachabscheider bezeichnet werden können. Haupt- und Nachabscheider können unterschiedlich oder bevorzugt identisch gestaltet und in getrennten Vorrichtungen angeordnet sein. Hierbei hat der Nachabscheider die Funktion einer Analysestrecke, die durch den eignen Druckverlust ein Maß für die Vollständigkeit der Entfernung des Wassers aus dem Amalgam im Hauptabscheider bereitstellt.

In einer bevorzugten Ausführungsform des Verfahrens wird die Abscheidervorrichtungen durch einen Filter ergänzt und verhindert, dass Ablagerungen, welche sich von dem katalytisch wirkenden Element lösen und mit dem Alkalimetallamalgam mitgeführt werden, zu Stockungen und Verstopfungen in den folgenden Anlagenteilen führen. Ein Filter kann für diesen Zweck stromabwärts von der Abscheidervorrichtung oder bevorzugt zwischen Haupt- und Nachabscheider angeordnet sein.

In einer bevorzugten Ausführungsform des Verfahrens ist ein Filter ein integraler Bestandteil der Abscheidervorrichtung und wird mit dieser auch gleichzeitig regeneriert. Hierbei wird das Alkalimetallamalgam durch das in einem Strömungsrohr angeordnete katalytische Element geführt, in einen das Strömungsrohr umgebenden Raum geleitet und dann durch einen das Strömungsrohr als Hülle umgebenden Filter geführt, bevor es weiteren Verfahrensschritten zugeführt wird.

In einer bevorzugten Ausführungsform des Verfahrens wird das Leitungsstück vor der Abscheidervorrichtung aus einem Kunststoffmaterial gefertigt, um eine vorzeitig eintretende Zersetzungsreaktion des Alkalimetallamalgams mit dem in geringen Mengen mitgeführten Wasser in diesem Streckenabschnitt zu vermeiden.

Mit dem erfindungsgemäßen Verfahren ist es möglich, geringe Mengen Wasser aus Alkalimetallamalgam zu entfernen. Der Wassergehalt kann bis auf einen Wert von < 0,2 ppm reduziert werden. Diese Reduzierung des Wassergehalts hat sich als ausreichend erwiesen, um einerseits Stockungen und Verstopfungen von Anlagenteilen zu verhindern, welche durch die bei einer Zersetzungsreaktion gebildeten Ablagerungen aus Alkalimetallhydroxid und/oder Amalgamhaltigen Ablagerungen hervorgerufen werden.

Das erfindungsgemäße Verfahren bietet eine einfache und kostengünstige Möglichkeit, Spuren von Wasser aus Alkalimetallamalgam zu entfernen, ohne dass eine thermische Behandlung oder der Einsatz von zusätzlichen Stoffen notwendig ist. Darüber hinaus gelingt eine Aufreinigung des Alkalimetallamalgams ohne großen Aufwand, durch die Abtrennung von verunreinigenden Bestandteilen. Die Aufarbeitung von Alkalimetallamalgam mit dem erfindungsgemäßen Verfahren lässt sich gut in einen bestehenden Prozess integrieren, ohne dass die Fahrweise des gesamten Verfahrens beeinträchtigt wird. Gleichzeitig kann die Betriebsdauer einer Anlage mit dem erfindungsgemäßen Verfahren erhöht werden.

## Patentansprüche

1. Verfahren zum Entfernen von geringen Mengen an Wasser und möglichen weiteren Bestandteilen aus Alkalimetallamalgam, wobei das Alkalimetallamalgam mit einem Element, welches nicht in Quecksilber löslich ist und eine Reaktion des Wassers mit dem Alkalimetallamalgam und möglichen weiteren Bestandteilen zu Hydroxiden und Wasserstoff katalysiert und ausgewählt ist aus der Gruppe Eisen, Nickel, Kobalt, Titan, Chrom, Molybdän, Stähle, die gegen Quecksilber inert sind, Wolframcarbid und Graphit in einer Abscheidervorrichtung in Kontakt gebracht wird.

2. Verfahren nach Anspruch 1, **dadurch gekennzeichnet, dass** der Anteil von Wasser im Alkalimetallamalgam in einem Bereich von 0,3 bis 5,0 ppm liegt.

3. Verfahren nach Anspruch 1 oder 2, **dadurch gekennzeichnet, dass** das Wasser auf einen Anteil von < 0,3 ppm, bevorzugt auf einen Anteil < 0,2 ppm in dem Alkalimetallamalgam reduziert wird.

4. Verfahren nach Anspruch 1, **dadurch gekennzeichnet, dass** das katalytisch wirkende Element ausgewählt ist aus der Gruppe: Eisen, Titan, Molybdän, Stählen, die gegen Quecksilber inert sind, Wolframcarbid und Graphit.

5. Verfahren nach einem der Ansprüche 1 bis 4, **dadurch gekennzeichnet, dass** die möglichen weiteren Bestandteile als entsprechende Amalgame vorliegen.

6. Verfahren nach einem der Ansprüche 1 bis 4, **dadurch gekennzeichnet, dass** die möglichen weiteren Bestandteile als Eisen-, Alkali- und Erdalkali-haltige Feststoffpartikel im Alkalimetallamalgam vorliegen und aus diesem an dem katalytisch wirkenden Element abgeschieden werden.

7. Verfahren nach einem der Ansprüche 1 bis 6, **dadurch gekennzeichnet, dass** das katalytisch wirkende Element ein Gewebe, eine Packung oder eine Schüttung aus Formkörpern ist, welches in der Abscheidervorrichtung angeordnet ist.

8. Verfahren nach einem der Ansprüche 1 bis 7, **dadurch gekennzeichnet, dass** das katalytisch wirkende Element ein zu einer Rolle aufgewickeltes Gewebe ist.

9. Verfahren nach einem der Ansprüche 1 bis 8, **dadurch gekennzeichnet, dass** der Druckverlust über die Abscheidervorrichtung bestimmt wird.

10. Verfahren nach einem der Ansprüche 1 bis 9, **dadurch gekennzeichnet, dass** mindestens zwei Abscheidervorrichtungen parallel zueinander angeordnet sind, die im Wechsel betrieben werden.

11. Verfahren nach Anspruch 10, **dadurch gekennzeichnet, dass** der Wechsel von der ersten Abscheidervorrichtung auf die zweite Abscheidervorrichtung bei Überschreiten eines bestimmten Druckverlustes über die erste Abscheidervorrichtung erfolgt.

12. Verfahren nach Anspruch 10, **dadurch gekennzeichnet, dass** die erste Abscheidervorrichtung nach dem Wechsel regeneriert wird.

13. Verfahren nach Anspruch 12, **dadurch gekennzeichnet, dass** die Abscheidervorrichtung durch Spülen mit Wasser und Einblasen eines Gasstromes mit einer Temperatur von 20 bis 150°C regeneriert wird.

14. Verfahren nach einem der Ansprüche 1 bis 13, **dadurch gekennzeichnet, dass** mehrere hintereinander angeordnete Abscheidervorrichtungen umfasst sind, in welche identische oder unterschiedlich gestaltete katalytisch wirkende Elemente angeordnet sind.

15. Verfahren nach einem der Ansprüche 1 bis 14, **dadurch gekennzeichnet, dass** auf die Abscheidervorrichtung folgend ein Filter angeordnet ist, der abgelöste Partikel der Abscheidervorrichtung abscheidet.

16. Verfahren nach einem der Ansprüche 1 bis 14, **dadurch gekennzeichnet, dass** ein Filter in der Abscheidervorrichtung integriert ist, der mit der Abscheidervorrichtung gleichzeitig regeneriert wird.

17. Intergriertes Verfahren, bei dem ein nach einem der Ansprüche 1 bis16 erhaltenenes Alkalimetallamalgam in einem Wärmetauscher auf eine geeignete Betriebstemperatur gebracht, die für Natriumamalgam zwischen 310 und 400°C und für Kaliumamalgam zwischen 260 und 400 °C liegt, und anschließend einer Elektrolyse mit einer Alkalimetallamalgam enthaltenden Anode, einem Alkalimetallionen leitenden Festelektrolyt und flüssigem Alkalimetall als Kathode zugeführt wird.

## Claims

1. A process for removing small amounts of water and possible further constituents from alkali metal amalgam, wherein the alkali metal amalgam is brought into contact in a precipitator apparatus with an element which is insoluble in mercury and catalyzes the reaction of water with the alkali metal amalgam and the possible further constituents to form hydroxides and hydrogen and is selected from the group consisting of iron, nickel, cobalt, titanium, chromium, molybdenum, steels which are inert toward mercury, tungsten carbide and graphite.

2. The process according to claim 1, wherein the proportion of water in the alkali metal amalgam is in the range from 0.3 to 5.0 ppm.

3. The process according to claim 1 or 2, wherein the amount of water is reduced to a proportion of < 0.3 ppm, preferably to a proportion of < 0.2 ppm, in the alkali metal amalgam.

4. The process according to claim 1, wherein the catalytically active element is selected from the group consisting of iron, titanium, molybdenum, steels which are inert toward mercury, tungsten carbide and graphite.

5. The process according to any of claims 1 to 4, wherein the possible further constituents are present as corresponding amalgams.

6. The process according to any of claims 1 to 4, wherein the possible further constituents are present as solid particles comprising iron, alkali metals and alkaline earth metals in the alkali metal amalgam and are deposited from this onto the catalytically active element.

7. The process accord to any of claims 1 to 6, wherein the catalytically active element is a woven mesh, a packing or a bed of shaped bodies which is located in the precipitator apparatus.

8. The process according to any of claims 1 to 7, wherein the catalytically active element is a woven mesh rolled up to form a roll.

9. The process according to any of claims 1 to 8, wherein the pressure drop over the precipitator apparatus is determined.

10. The process according to any of claims 1 to 9, wherein at least two precipitator apparatuses which are operated alternately are arranged in parallel.

11. The process according to claim 10, wherein the change from the first precipitator apparatus to the second precipitator apparatus is carried out when a particular pressure drop over the first precipitator apparatus is exceeded.

12. The process according to claim 10, wherein the first precipitator apparatus is regenerated after the change.

13. The process according to claim 12, wherein the precipitator apparatus is regenerated by flushing with water and blowing a gas stream having a temperature of from 20 to 150°C into the apparatus.

14. The process according to any of claims 1 to 13, wherein a plurality of precipitator apparatuses which are arranged in series and in which identical or differently structured catalytically active elements are arranged are comprised.

15. The process according to any of claims 1 to 14, wherein a filter which separates off the detached particles from the precipitator apparatus is arranged downstream of the precipitator apparatus.

16. The process according to any of claims 1 to 14, wherein a filter which is regenerated simultaneously with the precipitator apparatus is integrated into the precipitator apparatus.

17. An integrated process, wherein an alkali metal amalgam obtained according to any of claims 1 to 16 is brought to a suitable operating temperature, which for sodium amalgam is in the range from 310 to 400°C and for potassium amalgam is in the range from 260 to 400°C, in a heat exchanger and subsequently fed to an electrolysis using an anode comprising alkali metal amalgam, a solid electrolyte which conducts alkali metal ions and liquid alkali metal as cathode.

## Revendications

1. Procédé d'élimination de petites quantités d'eau et d'autres constituants possibles d'un amalgame de métaux alcalins, l'amalgame de métaux alcalin étant mis en contact avec un élément, qui n'est pas soluble dans le mercure et qui catalyse une réaction de l'eau avec l'amalgame de métaux alcalins et d'autres constituants possibles en hydroxydes et hydrogène, et qui est choisi dans le groupe constitué par le fer, le nickel, le cobalt, le titane, le chrome, le molybdène, les aciers qui sont inertes vis-à-vis du mercure, le carbure de tungstène et le graphite, dans un dispositif de séparation.

2. Procédé selon la revendication 1, **caractérisé en ce que** la proportion d'eau dans l'amalgame de métaux alcalins se situe dans une plage allant de 0,3 à 5,0 ppm.

3. Procédé selon la revendication 1 ou 2, **caractérisé en ce que** l'eau est réduite à une proportion < 0,3 ppm, de préférence à une proportion < 0,2 ppm, dans l'amalgame de métaux alcalins.

4. Procédé selon la revendication 1, **caractérisé en ce que** l'élément à action catalytique est choisi dans le groupe constitué par : le fer, le titane, le molybdène, les aciers qui sont inertes vis-à-vis du mercure, le carbure de tungstène et le graphite.

5. Procédé selon l'une quelconque des revendications 1 à 4, **caractérisé en ce que** les autres constituants possibles se présentent sous la forme d'amalgames correspondants.

6. Procédé selon l'une quelconque des revendications 1 à 4, **caractérisé en ce que** les autres constituants possibles se présentent sous la forme de particules solides contenant du fer, des alcalis et des alcalino-terreux dans l'amalgame de métaux alcalins, et précipitent à partir de celui-ci sur l'élément à action catalytique.

7. Procédé selon l'une quelconque des revendications 1 à 6, **caractérisé en ce que** l'élément à action catalytique est un tissu, un garnissage ou un remplissage de corps moulés, qui est placé dans le dispositif de séparation.

8. Procédé selon l'une quelconque des revendications 1 à 7, **caractérisé en ce que** l'élément à action catalytique est un tissu enroulé en un rouleau.

9. Procédé selon l'une quelconque des revendications 1 à 8, **caractérisé en ce que** la perte de charge dans le dispositif de séparation est déterminée.

10. Procédé selon l'une quelconque des revendications 1 à 9, **caractérisé en ce qu'**au moins deux dispositifs de séparation sont placés en parallèle, et exploités alternativement.

11. Procédé selon la revendication 10, **caractérisé en ce que** le changement du premier dispositif de séparation au second dispositif de séparation a lieu lorsqu'une perte de charge déterminée est dépassée dans le premier dispositif de séparation.

12. Procédé selon la revendication 10, **caractérisé en ce que** le premier dispositif de séparation est régénéré après le changement.

13. Procédé selon la revendication 12, **caractérisé en ce que** le dispositif de séparation est régénéré par rinçage avec de l'eau et injection d'un courant gazeux à une température de 20 à 150 °C.

14. Procédé selon l'une quelconque des revendications 1 à 13, **caractérisé en ce qu'**il comprend plusieurs dispositifs de séparation placés les uns après les autres, dans lesquels des éléments à action catalytique de conception identique ou différente sont placés.

15. Procédé selon l'une quelconque des revendications 1 à 14, **caractérisé en ce qu'**un filtre est placé après le dispositif de séparation et sépare les particules détachées du dispositif de séparation.

16. Procédé selon l'une quelconque des revendications 1 à 14, **caractérisé en ce qu'**un filtre est intégré dans le dispositif de séparation, et régénéré en même temps que le dispositif de séparation.

17. Procédé intégré, selon lequel un amalgame de métaux alcalins obtenu selon les revendications 1 à 16 est porté dans un échangeur de chaleur à une température d'exploitation appropriée, qui est comprise entre 310 et 400 °C pour un amalgame de sodium et entre 260 et 400 °C pour un amalgame de potassium, puis introduit dans une électrolyse avec une anode contenant un amalgame de métaux alcalins, un électrolyte solide conduisant les ions de métaux alcalins et un métal alcalin liquide en tant que cathode.
